Europäisches Patentamt

European Patent Office

Office européen des brevets

(19)

(11) Publication number: 0 325 302
A2

## (12) EUROPEAN PATENT APPLICATION

(21) Application number: 89101152.0

(51) Int. Cl.⁴: G07C 1/30 , G07F 7/00

(22) Date of filing: 23.01.89

(30) Priority: 21.01.88 JP 11801/88
28.01.88 JP 18283/88
31.05.88 JP 135302/88
07.06.88 JP 139800/88

(43) Date of publication of application:
26.07.89 Bulletin 89/30

(84) Designated Contracting States:
AT BE CH DE ES FR GB GR IT LI LU NL SE

(71) Applicant: OMRON TATEISI ELECTRONICS
CO.
10, Tsuchido-cho Hanazono Ukyo-ku
Kyoto-shi Kyoto-fu(JP)

(72) Inventor: Nakagawa, Akihiko c/o Omron
Tateisi
Electronics Co. Patent Department 20,
Igadera
Shimokaiinji Nagaokakyo-shi Kyoto-fu(JP)
Inventor: Iga, Toshiaki c/o Omron Tateisi
Electronics Co. Patent Department 20,
Igadera

Shimokaiinji Nagaokakyo-shi Kyoto-fu(JP)
Inventor: Ohbiraki, Tetsuo c/o Omron Tateisi
Electronics Co. Patent Department 20,
Igadera
Shimokaiinji Nagaokakyo-shi Kyoto-fu(JP)
Inventor: Ejima, Kazuhiko c/o Omron Tateisi
Electronics Co. Patent Department 20,
Igadera
Shimokaiinji Nagaokakyo-shi Kyoto-fu(JP)
Inventor: Ohara, Isamu c/o Omron Tateisi
Electronics Co. Patent Department 20,
Igadera
Shimokaiinji Nagaokakyo-shi Kyoto-fu(JP)
Inventor: Fujiki, Motoi c/o Omron Tateisi
Electronics Co. Patent Department 20,
Igadera
Shimokaiinji Nagaokakyo-shi Kyoto-fu(JP)

(74) Representative: WILHELMS, KILIAN &
PARTNER Patentanwälte
Eduard-Schmid-Strasse 2
D-8000 München 90(DE)

(54) Portable electronic meter.

(57) A portable electronic meter for measuring the time duration of a service or the quantity of a commodity provided, comprising a main body and a detachable part, the latter of which may consist of an essential element of the internal circuit of the portable electronic meter such as a battery pack, an IC card, or the like. The detachable part is sold at a price which includes the cost for the service or the commodity which the buyer is entitled to. To permit the repeated use of the main body, the detachable part is provided with a reset element which cooperates with a corresponding part of the main body to restore the main body to its initial un-used state, and, in order to prevent illegal restting of the main body, the reset element is disabled following its activation. Since the detachable part of the electronic meter is obviously much less expensive than the main body, a significant economical advantage can be obtained because the main body may be used indefinitely. Furthermore, since only the detachable part is capable of resetting the main body and it is only for once for each detachable part to be able to do so, it is extremely difficult to fraudulently reset the main body.

FIG. 2

## PORTABLE ELECTRONIC METER

### TECHNICAL FIELD

The present invention relates to a portable electronic meter for use, among other possibilities, in pre-paid parking systems, and in particular to such a portable electronic meter which is economical to operate.

### BACKGROUND OF THE INVENTION

As a charge pre-paid parking system, it is conceivable to distribute a small electronic parking meter to each potential user of the parking service at a certain price including the cost for the parking privilege of a certain time duration so that he may place the parking meter in his car where it is visible from outside, and set it running while the car is parked. Each parking meter is assigned with a certain number of units corresponding to the time duration for which the user is permitted to park his car, and the number of the remaining units is displayed on a display unit of the parking meter so that the attendant of the parking facility may see that no fraudulent use of the parking facility is taking place. When the available units are all exhausted, the parking meter must be either reset or discarded.

In the former case, it is highly difficult to prevent unauthorized resetting of the parking meter. In the latter case, there is a considerable economical disadvantage. In either case, the need to handle the parking meter for replacement or resetting may not be very convenient because the parking meter has a certain size. Furthermore, keeping several spare parking meters in stock is neither convenient nor economical.

### BRIEF SUMMARY OF THE INVENTION

In view of such inconveniences, a primary object of the present invention is to provide a portable electronic meter for a charge pre-paid system which can be used repeatedly without incurring excessive wastes.

A second object of the present invention is to provide a portable electronic meter which is protected from fraudulent renewing or resetting thereof.

A third object of the present invention is to provide a portable electronic meter which consists of a main body and a much smaller detachable element so that the user may keep a stock of a desired number of such detachable elements to avoid inadvertently using up the pre-paid cost.

These and other objects of the present invention can be accomplished by providing a portable electronic meter for measuring the time duration of a service or the quantity of a commodity provided, comprising: a main body including storage means for storing a certain number of units which correspond to a certain amount of the time or quantity, subtraction means for carrying out subtraction from the number of units according to the elapsing of time or the amount of the commodity provided, and display means for displaying the number of the remaining units; and a detachable element including circuit means which is required for the operation of the subtraction means, and reset means for restoring the number of units stored in the storage means to an initial value; the main body further including disabling means for disabling the reset means of the detachable element following the resetting of the storage means by the reset means.

According to this structure, simply by replacing the detachable element, which may consist of a battery pack, an IC card or the like, the main body of the electronic meter can be continually used. The price of the detachable element typically includes the cost of the service or the commodity which the buyer of the detachable element is entitled to. Since the detachable element of the electronic meter is obviously much less expensive to manufacture than the main body, a significant economical advantage can be obtained because the main body may be used indefinitely. Furthermore, since only the detachable element is capable of resetting the main body and it is only for once for each detachable element to reset the main body, it is extremely difficult to fraudulently reset the main body.

When the detachable element comprises a battery for the main body, the disabling means may comprise means for blowing the fuse of the detachable element or, altervatively, for short-circuiting the two ends of the battery. This may be conveniently accomplished by using mechanical or electric means which irreversibly blow the fuse of the detachable element or forms a short-circuit path across the two ends of the battery. According to a preferred embodiment of the present invention, the circuit means of the detachable element comprises a circuit pattern formed on a sheet member which is adapted to be attached between the battery and a casing part of the detachable element so as to be necessarily destroyed upon removal of the battery, and the disabling means may accordingly comprise electric contact means which cooperates with the circuit pattern to short-circuit the two ends of the battery.

The resetting of the storage means may be accomplished either when the detachable element is pushed into the main body beyond its normal operative position or when the disabling means is activated when the detachable element is pulled out of the main body from its normal operative position.

According to a preferred embodiment of the present invention, the detachable element, which may consist of an IC card carrying an OTPROM (one-time programmable read-only-memory), comprises second storage means storing a reset command for activating the reset means, and the main body comprises interface means for transmitting the reset command from the second storage means to the reset means, the disabling means erasing the reset command stored in the second storage means following the transmission of the reset command from the second storage means to the reset means. Thus, the detachable element may consist of a card-like medium which is convenient to handle and is inexpensive to manufacture.

According to a certain aspect of the present invention, the second storage means further stores a registered trademark therein, and the main body further comprises image data transmission mean for transmitting the trademark to the display means at least once during the entire service life of the detachable element, and inhibition means for disabling the main body when it has failed to detect the trademark in the second storage means. Therefore, there is produced a strong discouragement against the use of an illegally duplicated detachable element because the user thereof is automatically led into committing an infringement of trademark right which is easier to enforce in most countries than the exclusive right to manufacture such media.

As an effective means to discourage illegal duplication of the main body, the second storage means may comprise coded data including specified coded information, and the main body may accordingly comprise inhibition means for disabling the main body when it has failed to detect the coded information in the second storage means.

Since the cost of the service or the commodity offered may vary depending on the time and/or the locality, it is advantageous if the main body is further provided with select switch means for varying the rate at which the subtraction is made.

According to another preferred embodiment of the present invention where an IC card is used as the detachable element, the storage means consisting of OTPROM is placed in the detachable element and the main body includes counter means for rewriting the memory areas of the OTPROM included in the detachable element so that the extent of the consumption of the IC card may be scaled according to the number of the bits of the OTPROM rewritten by the counter means.

## BRIEF DESCRIPTION OF THE DRAWINGS

Now the present invention is described in the following with reference to the appended drawings, in which:

Figure 1 is a perspective view of the first embodiment of the portable electronic meter according to the present invention which is applied to a parking meter;

Figure 2 is a partly broken-away plan view of the portable electronic parking meter of Figure 1;

Figure 3 is a perspective view of the slider for electrically discharging the battery;

Figure 4 is a functional block diagram of the parking meter;

Figures 5 and 6 are line diagrams showing the circuitry of the battery pack and the arrangement of the contact pieces of the main body and the battery pack in two different states;

Figure 7 is an exploded perspective view of the second embodiment of the portable electronic meter according to the present invention which is also applied to a parking meter;

Figure 8 is a circuit diagram showing the circuitry and the arrangement of the contact pieces of the battery pack;

Figure 9 is a sectional view of the parking meter of the second embodiment;

Figure 10 is a functional block diagram of the parking meter of the second embodiment;

Figure 11 is a perspective view of the third embodiment of the portable electronic meter according to the present invention;

Figure 12 and 13 are functional block diagram and a flow chart of the third embodiment shown in Figure 11 for illustrating the internal structure and the operation of the same; and

Figure 14 and 15 are a functional block diagram and a flow chart of the fourth embodiment of the present invention which is similar in external appearance to the one shown in Figure 11.

## DETAILED DESCRIPTION OF THE PREFERRED EMBODIMENTS

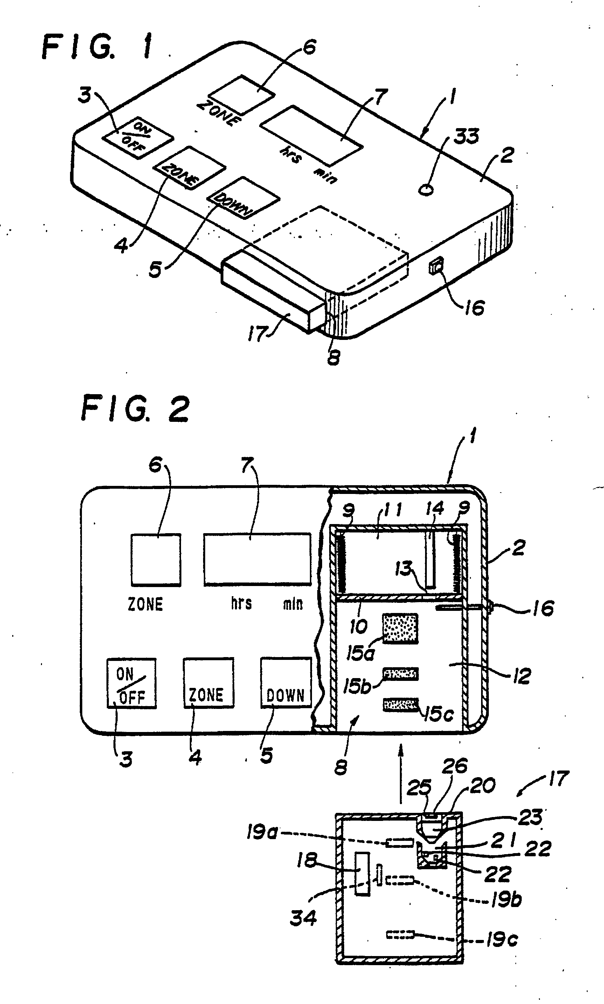

Referring to Figure 1, numeral 1 denotes the portable electronic parking meter according to the present invention which is shaped like a card, and on the surface of its casing 2 are provided a group of switches consisting of an ON/OFF switch 3, a zone switch 4 and a down switch 5, and a group of display units consisting of a zone display unit 6, a time/remaining number of units display unit 7 and the service end display unit 33.

The front end face of the casing 2 is provided with a cavity 8, as shown in Figure 2 also, which is divided into an inner chamber 11 and an outer chamber 12 by a moveable partition wall 10 which is supported by springs 9 from inside. The moveable partition wall 10 is provided with a notch 13, and a reset terminal 14 extends from the innermost wall of the inner chamber 11 towards this notch 13.

The bottom wall surface of the outer chamber 12 is provided with three contact pieces 15a, 15b and 15c in that order from the inner most one, and the contact piece 15a is larger than the other two while the contact pieces 15b and 15c are relatively close to each other. Numeral 16 denotes a reset prohibition pin which is inserted from a side end surface of the casing 2 with its end portion protruding into the outer chamber 12.

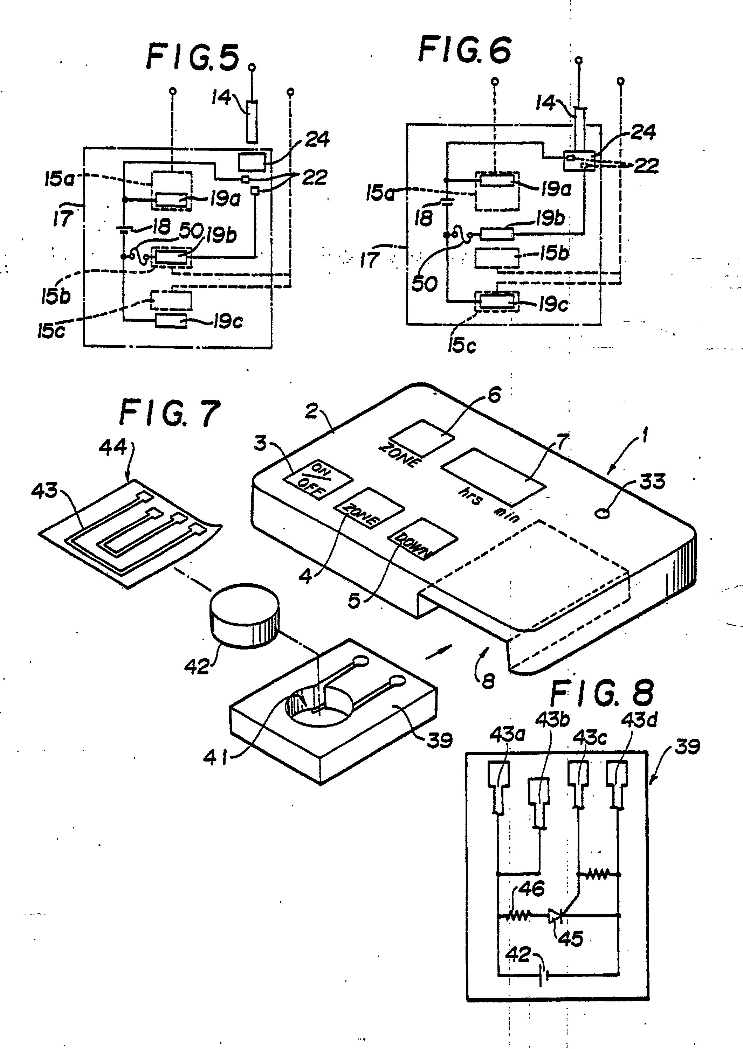

Numeral 17 denotes a battery case which accommodates a battery 18 therein, and is adapted to be slidably received in the outer chamber 12 of the casing 2 during the operation of the portable electronic parking meter 1. As shown by the planar circuit diagrams of Figures 5 and 6, the external bottom surface of the battery case 17 is provided with a fuse 34 as well as contact pieces 19a, 19b and 19c which correspond to the aforementioned contact pieces 15a, 15b and 15c. The battery case 17 is further provided with a first receptacle 20 and a second receptacle 21 so as to oppose the notch 13 with the first receptacle 20 located behind the second receptacle 21, as seen from the front face of the casing 2, when the battery case 17 is received in the outer chamber 12 as best shown in Figure 2. The bottom surface of the second receptacle 21 is provided with a pair of contact pieces 22.

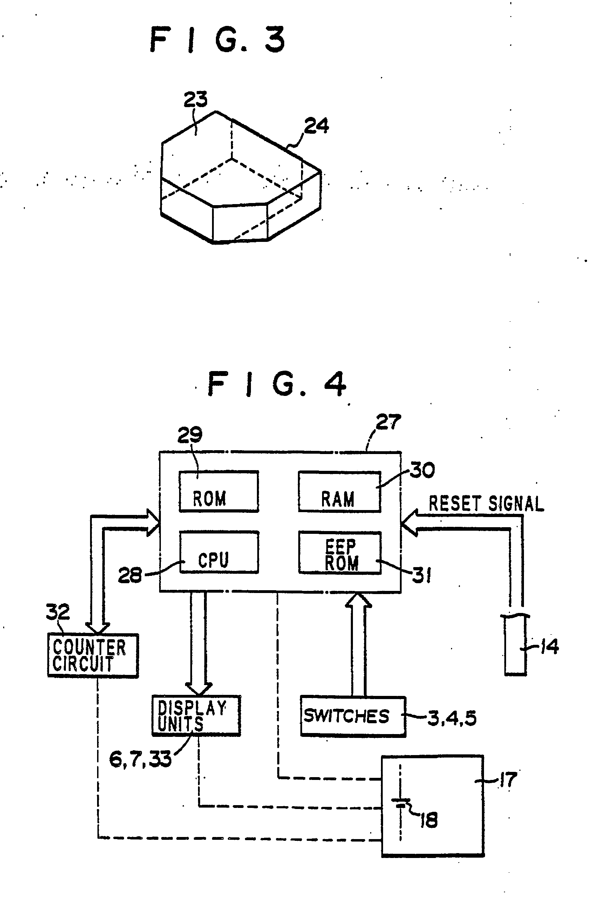

Numeral 23 denotes a slider which is normally received in the first receptacle 20. As shown in Figure 3, an electroconductive surface 24 is provided on its bottom and one of its side faces, this side face being directed to the open end 25 of the first receptacle 20 directed toward the notch 13 and the reset terminal 14. A positioning piece 26 for the slider 23 projects from a portion adjacent the open end 25 of the first receptacle 20 to keep the slider 23 in the receptacle 20.

Now the circuit structure of the portable electronic parking meter 1 is described in the following with reference to Figure 4.

Numeral 27 denotes a control unit which consists of a CPU 28, ROM 29, RAM 30 and EEPROM 31. The control unit 27 is connected to a counter circuit 17 as well as to the display units 6, 7 and 33 and the switches 3, 4 and 5, and the battery 18 accommodated in the battery case 17 supplies electric power to the control unit 27, the counter circuit 32 and the display units 6, 7 and 33. The control unit 27 is adapted to receive a reset signal for resetting or clearing the contents of the EEPROM 31 from the aforementioned reset terminal 14.

Now the operation of the portable electronic parking meter according to the above-described embodiment is described in the following.

The main body of the portable electronic parking meter 1 and the battery case 17 accommodating the battery 18 are sold, for instance, at gasoline stations, and the price of each battery case 17 includes a sum of money corresponding to the total time duration of parking which is allowed to the user when the battery case is used with the portable electronic parking meter 1. The portable electronic parking meter 1 stores in its EEPROM 31 a certain number of units corresponding to the possible time duration of parking at the time of its sale.

When the user parks his car, he presses the switch 3 to bring the portable electronic parking meter 1 into its operative state with the battery case 17 received in the main body. Then, the display unit 7 displays the remaining number of units, for instance minutes and hours, which is the full number without any subtraction when the portable electronic parking meter 1 is used for the first time. Then a zone selection is made by pressing the switch 4. A zone is selected from a group of zones by the user according to the area in which his car is parked. Specifically, the hourly charges for parking are higher in the city center and are lower in the suburbs, and the selection of the zone determines the rate at which the subtraction is made from the number of the remaining units according to the elapsing of time. The switch 5 is for selectively setting the maximally permitted time duration for parking for the particular area or for showing the whole time duration which the owner of the battery case 17 is entitled to.

After pressing both the switches 3 and 4 as described above, the user places the portable electronic parking meter 1 in his car so as to be visible from outside, and then leaves his car. The counter circuit 32 starts its counting operation upon pressing of the switch 3, and the CPU 28 subtracts from the number of the remaining units stored in the EEPROM 31 according to the count signal from the counter circuit 32 and accordingly rewrites the contents of the EEPROM 31. When the user returns to his car and presses the switch 3 again, the subtraction stops and the number of the available units after the subtraction is left stored in the EEPROM 31.

When the portable electronic parking meter 1 is put to use again in the same way as described above for the next parking, the number of the remaining units stored in the EEPROM 31 is further reduced with the elapsing of time during the time duration of parking until the number of the remaining units stored in the EEPROM 31 becomes zero, upon which an LED in the display unit 33 lights up.

Now the resetting operation for the number of the remaining units stored in the EEPROM 31 is described in the following.

When the number of the remaining units stored in the EEPROM 31 is reduced to zero, first of all, the reset prohibition pin 16 is pulled out, and the battery case 17 is pushed into the inner chamber 11. As a result, the moveable partition wall 10 is pushed inwardly against the spring force of the springs 9, and the reset terminal 14 is admitted through the notch 13 until the reset terminal 14 passes the positioning piece 26. As the battery case 17 is pushed further into the inner chamber 11, the free end of the reset terminal 14 abuts the slider 23 received in the first receptacle 20 and pushes the slider 23 into the second receptacle 21.

When the battery case 17 is not pushed that far into the inner chamber 11 or during the normal operation of the portable electronic parking meter 1, as shown in Figure 5, an electric path is formed between the battery case 17 and the pepm 1 for supplying electric power to the latter with the contact piece 19a connected to the contact piece 15a and the contact piece 19b to the contact piece 15b. On the other hand, when the battery case 17 is pushed deep enough as described above, as shown in Figure 6, an electric path is formed between the battery case 17 and the pepm 1 for supplying electric power to the latter with the contact piece 19a connected to the contact piece 15a and the contact piece 19c to the contact piece 15c. The configurations and the relative positions of the contact pieces 19a, 19b, 19c, 15a, 15b and 15c are so determined that the above described switch-over can be accomplished without involving any interruption of the supply of electric power to the main body.

When the battery case 17 is pushed deep enough, beside from the establishment of the connections between the contact pieces 19a and 15a and between the contact pieces 19c and 15c, the electroconductive surface 24 of the slider 23 connects the two contact pieces 22 in the second receptacle to each other. As a result, a bypass line is formed along the battery 18, the contact piece 22, the electroconductive surface 24, the contact piece 22, the contact piece 19b, the fuse 34 and the battery 18, and, as the electroconductive surface 24 transmits the voltage of this line to the reset terminal 14, simultaneously as the formation of the bypass line causes the fuse 34 to be blown, a reset signal is supplied to the control unit 27.

By connecting the electroconductive surface 24 to the reset terminal 14 when the contact pieces 19a and 15a as well as the contact pieces 19c and 15c are connected to each other, a reset signal is produced and the number of the remaining units stored in the EEPROM 31 is reset or is increased to the initial maximum value.

After resetting the portable electronic parking meter 1 as described above, the user removes the battery case 17 from the casing 2. And, after the reset prohibition pin 16 is placed in its operative position, a newly purchased battery case 17 is inserted into the outer chamber 12 of the casing 2 so that the portable electronic parking meter 1 may be used all over again.

Thus, compared to the case where the whole portable electronic parking meter 1 including the battery case 17 is required to be discarded, only the battery case 17 is required to be discarded after the battery 18 has been exhausted according to the present invention, and a considerable economical advantage can be obtained. The battery case 17 removed from the casing 2 has its fuse 34 blown, and can therefore not be used again.

Figures 7 through 10 illustrate the second embodiment of the present invention applied to a portable electronic parking meter, and the parts corresponding to those of the previous embodiment are denoted with like numerals. As best shown in Figure 7, this portable electronic parking meter 1 is provided with a casing 2, on the surface of which are provided a group of switches consisting of an ON/OFF switch 3, a zone switch 4 and a down switch 5, and a group of display units consisting of a zone display unit 6, a time/remaining number of units display unit 7 and the service end display unit 33, all substantially in the same manner as in the previous embodiment.

The bottom face of the casing 2 is provided with a cavity 8 for slidably receiving a battery case 39 therein. The battery case 39 is provided with a circular receptacle 41 for receiving a battery 42 therein. The battery 42 is fixedly secured to the interior of the receptacle 41 by a strip of paper 44 carrying a circuit pattern 43 thereon. The paper strip 44 along with its circuit pattern 43 is adapted to be destroyed upon removal thereof to replace the battery 42, and the circuit pattern 43 is made complex enough to discourage any attempt to duplicate the circuit pattern 43.

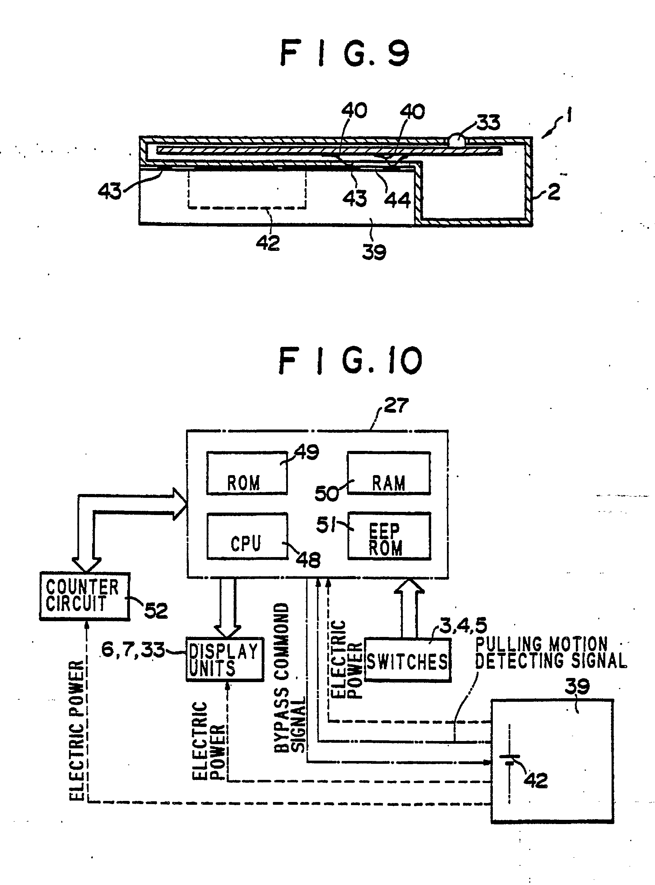

Figure 8 shows the circuit structure of the battery case 39 to which the paper strip 44 is attached, and numerals 43a, 43b, 43c and 43d denote the circuit patterns printed on the paper strip 44. The battery case 39 accommodates a thyristor 45 therein. When a battery 42 is placed in the receptacle 41 and the battery case 39 is inserted in the casing 2 with the paper strip 44 properly attached to the battery case 39, the circuit patterns 43a, 43b, 43c and 43d are elastically brought into contact with terminals 40 provided in the main body as shown in Figure 9.

Now the circuit structure of the portable electronic parking meter 1 is described in the following with reference to Figure 10.

Numeral 47 denotes a control unit which consists of a CPU 48, ROM 49, RAM 50 and EEPROM 51. The control unit 47 is connected to a counter circuit 52 as well as to the display units 6, 7 and 33 and the switches 3, 4 and 5. When the battery case 39 is inserted into the casing 2, electric power is supplied to the control unit 47, the counter circuit 52 and the display units 6, 7 and 33 with the patterns 43a and 43d coming into contact with the corresponding terminals 40 of the main body. The pattern 43b is adapted to produce a battery case removal detection signal for indicating the removal of the battery case 39, and the terminal 43c is adapted to receive a bypass command signal from the CPU 48.

Now the operation of the portable electronic parking meter 1 according to the above-described embodiment is described in the following with reference to the block diagram of Figure 10.

According to this portable electronic parking meter 1, the main body, the battery case 39, the paper strip 44 and the battery 48 are separately sold, and the price of the paper strip 44 corresponds to the cost for parking for a certain time duration which the user is entitled to by using the portable electronic parking meter 1.

When the battery case 39 which has the paper strip 44 attached thereto and the battery 42 received therein is fitted into the main body for the first time and the main body receives a supply of electric power from the battery 42, an initialization procedure (the same as resetting) is performed and the EEPROM 51 comes to store a certain number of pre-acquired units corresponding to a certain time duration of parking which is allowed to the user.

When the user parks his car and presses the switch 3, the number of available units, which is the full, unsubtracted number when the portable electronic parking meter 1 is used for the first time, is displayed on the display unit 7. Then a zone selection is made by pressing the switch 4. A zone is selected from a group of zones by the user according to the area in which his car is parked. Specifically, the hourly charges for parking are higher in the city center and are lower in the suburbs, and the selection of the zone determines the rate at which the subtraction is made from the number of the remaining units according to the elapsing of time. The switch 5 is for starting the action of a timer, and the display unit 7 shows the set time during the operation of the timer.

After pressing both the switches 3 and 4 as described above, the user places the portable electronic parking meter 1 in his car so as to be visible from outside, and then leaves his car. The counter circuit 52 starts its counting operation upon pressing of the switch 3, and the CPU 48 subtracts from the number of the remaining units stored in the EEPROM 51 according to the count signal from the counter circuit 52 and accordingly rewrites the contents of the EEPROM 51. When the user returns to his car and presses the switch 3, the subtraction stops and the number of the available units after the subtraction is left stored in the EEPROM 51.

When the portable electronic parking meter 1 is put to use again in the same way as described above for the next parking, the number of the remaining units stored in the EEPROM 51 is further reduced with the elapsing of time during the time duration of parking until the number of the remaining units stored in the EEPROM 51 becomes zero, upon which an LED in the display unit 33 lights up. According to the present invention, the main body of the portable electronic parking meter 1 can be used all over again along with the battery case 39 as long as the battery 42 and the paper strip 44 are replaced with new ones.

According to the present invention, the battery case 39 is removed when the number of the remaining units becomes zero. Since the circuit pattern 43b is shorter than the other circuit patterns 43a, 43c and 43d, the circuit pattern 43b is detached from the contact piece 40 of the main body before the others do, and the signal produced from this detachment is given to the CPU 28 as a signal indicative of the removal of the battery case 39. In response to this removal detection signal, the CPU 28 issues a bypass command signal, which is given to the battery case 39 via the circuit pattern 43c. This bypass command signal (H level) is supplied to the gate of the thyristor 45 to bring it to conductive state with the result that a bypass circuit is formed along the battery 42, a resistor 46, the thyristor 45 and the battery 42, with the result that the battery 42 is rapidly exhausted.

Therefore, even when the battery case 39 is restored back in the main body, it is not usable again anymore because the battery 42 is completely exhausted. Therefore, the user peels off the paper strip 44 from the battery case 39 to remove the battery 42, install a newly purchased battery 42, and secures the battery 42 with a newly purchased paper strip 44. Thereafter, the battery case 39 is fitted into the main body to reset the number of the remaining units and to place the portable electronic parking meter 1 suitable to be used all over again. Thus, portable electronic parking meter 1 according to the present invention can be used all over again simply by replacing the exhausted battery 42 and the paper strip 44.

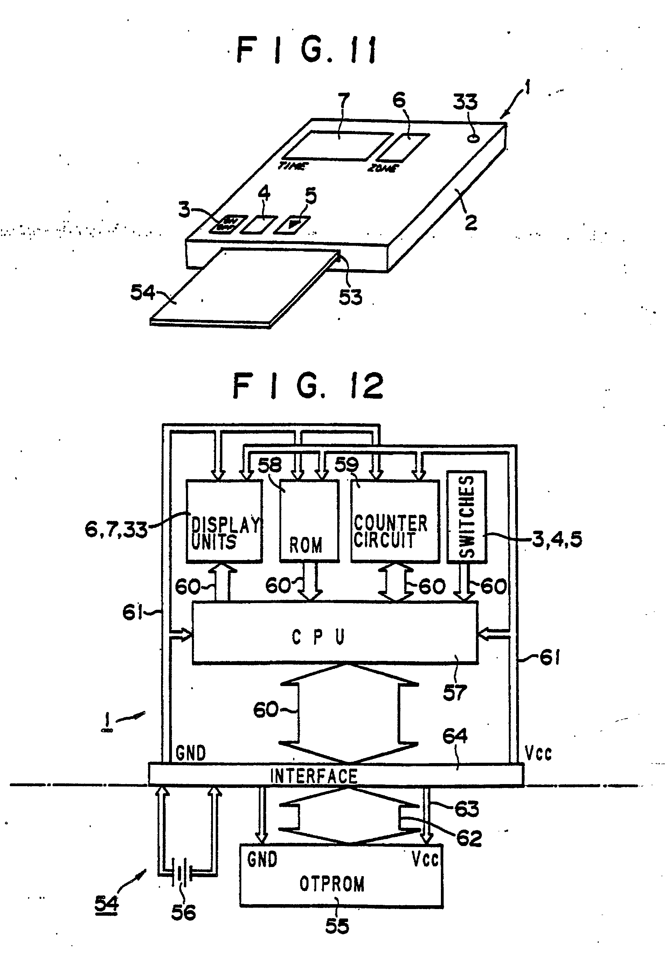

Figures 11 through 12 illustrate the third embodiment of the present invention applied to a portable electronic parking meter, and the parts corresponding to those of the previous embodiments are denoted with like numerals. As best shown in Figure 11, this portable electronic parking meter 1 is provided with a casing 2 shaped like a card. The surface of this casing 2 is provided with a group of switches including an ON/OFF switch 3, a zone switch 4 and a down switch 5, and a group of display units including a zone display unit 6, a time/remaining unit number display unit 7 and a service end display unit 33.

The main body of the portable electronic parking meter 1 comprises a microcomputer (CPU) 57, ROM 58 storing the operation program of the CPU 57, a counter circuit 59 serving for carrying out a counting according to the elapsing of service time, and an input/output interface 64 serving as an interface for an IC card 54. The CPU 57 is connected to the ROM 58, the counter circuit 59, the interface 64, the switches 3, 4 and 5, and the display units 6, 7 and 33, via a data bus 60. The input/output interface 64 is also connected to the CPU 57, the ROM 58, the counter circuit 59 and the display units 6, 7 and 33 of the main body, via a power line 61.

The front end face of the casing 2 of the main body is provided with an opening serving as an IC card inlet 53 through which the IC card 54 may be removably introduced into the main body of the portable electronic parking meter 1.

The IC card 54 accommodates therein OTPROM (one-time programmable read-only-memory) 55, and the aforementioned battery 56 serving as a power source for both this IC card 54 and the main body of the portable electronic parking meter 1. When the IC card 54 is inserted into the main body, the OTPROM 55 is connected to the input/output interface 64 via a data bus 62 in the IC card 54, and the battery 56 and the OTPROM 55 are connected to the input/output interface 64 via a power line 63.

When the IC card 54 is inserted into the main body of the portable electronic parking meter 1, the electric power from the battery 56 is supplied to the various elements of the main body as well as to the OTPROM 55 via the input/output interface 64.

The main body and the IC card 54 are sold, for instance, at gasoline stations, and the price of the IC card 54 includes the charges for parking a car for a certain time duration. The IC card 54 has a certain number of available units stored in its OTPROM 55 when it is is sold. In other words, the flags in the OTPROM 55 are set to "1" in all the storage areas each corresponding to a certain time unit.

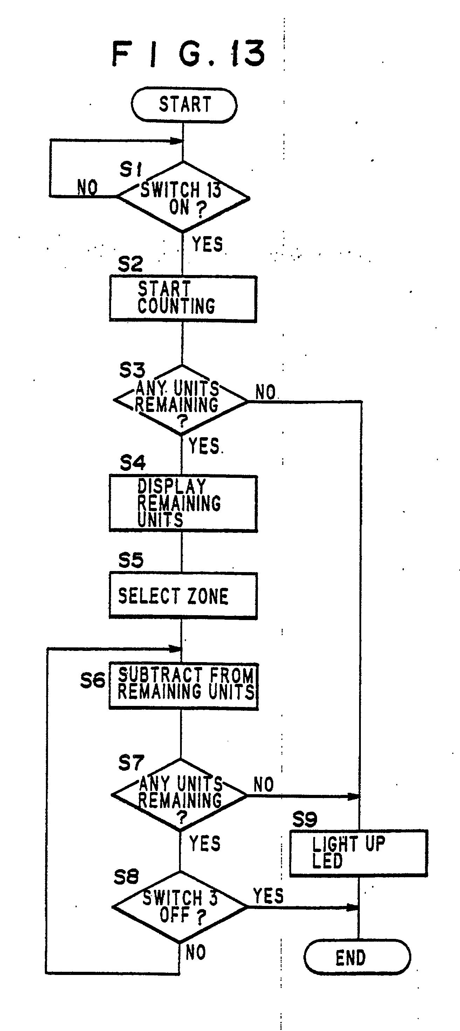

Now the mode of operation of the portable electronic parking meter 1 of the above-described embodiment is described in the following with reference to the flow chart of Figure 13.

After parking his car, the user presses the switch 3 to place the portable electronic parking meter 1 in its operative state when the IC card 54 is inserted in the main body of the portable electronic parking meter 1 and electric power is thereby supplied to the main body from the battery 56 of the IC card 54 (step S1). The counter circuit 59 then starts counting (step S2). It is then determined if there is any remaining units left in the OTPROM 55 or not (step S3), and, if there is any remaining units left in the OTPROM 55, the number of the remaining units is displayed on the display unit 7 (step S4). Thereafter, a zone is selected by the user pressing the switch 4 (step S5). This zone is selected from a group of zones by the user according to the area in which his car is parked. Specifically, the hourly charges for parking are higher in the city center and are lower in the suburbs, and the selection of the zone determines the rate at which the subtraction is made from the number of the remaining units according to the elapsing of time.

After pressing the switches 3 and 4, the user places the portable electronic parking meter 1 inside his car so as to be visible from outside and leaves his car. Then, according to the count action carried out by the counter circuit 59, the flags of the OTPROM 55 are reset (or rewritten) from "1" to "0" in a sequential manner after elapsing of each time unit to effect the subtraction from the number of the available remaining units (step S6). It is again determined if there is any remaining units left in the OTPROM 55 (step S7), and, as long as the switch 3 is not pressed for an OFF signal (step S8) and there are remaining units left in the OTPROM 55 (step S7), the system flow returns to step S6. In other words, as long as the car is kept parking and the IC card 54 is not used up, the steps S6, S7 and S8 are repeated.

When the flags of the OTPROM 55 are all reset from "1" to "0" in step S6 and the number of the remaining units is determined to be zero in step S7 while the car is parked, the LED in the display unit 33 is lit up (step S9) and the system flow is discontinued. If an exhausted or used-up IC card 54 is used, the number of the remaining units is determined to be zero in step S3 and the system flow advances to step S9.

If the attendant of the parking facility finds the display unit 33 being lit up, he judges the car as a non-paying car. To avoid this situation, the user checks the number of the remaining units displayed before parking his car in step S4 if it is sufficient for the intended time duration of parking or not. If it is anticipated to be insufficient, he may replace the IC card 54 with a new one carrying a sufficient number of units remaining.

If it is determined that there are remaining units left in step S7, the user simply presses the switch 3 to terminate the operation of the portable electronic parking meter 1 upon returning to his car in step S8.

If the system operation is terminated by the system flow advancing to step S9 either from step S3 or S7, the portable electronic parking meter can be used all over again simply by removing the IC card 54 and replacing it with a newly purchased IC card 54. In other words, according to the present invention, only the IC card 54 is required to be discarded and the main body of the portable electronic parking meter 1 is suitable for repeated use and is therefore not required to be wastefully discarded.

Since the number of the remaining units is stored in the OTPROM 55 of the IC card 54, once the contents of the OTPROM 55 are rewritten in the resetting procedure of step S6, any further rewriting of the memory contents is not possible and it is not possible for the user to reset the flags of the OTPROM 55 of a used-up IC card 54 from "0" to "1" for unauthorized repeated use of the IC card 54.

When the operation of the system is terminated subsequent to the execution of step S8, the portable electronic parking meter 1 can be used for the next parking without replacing the IC card 54 received therein.

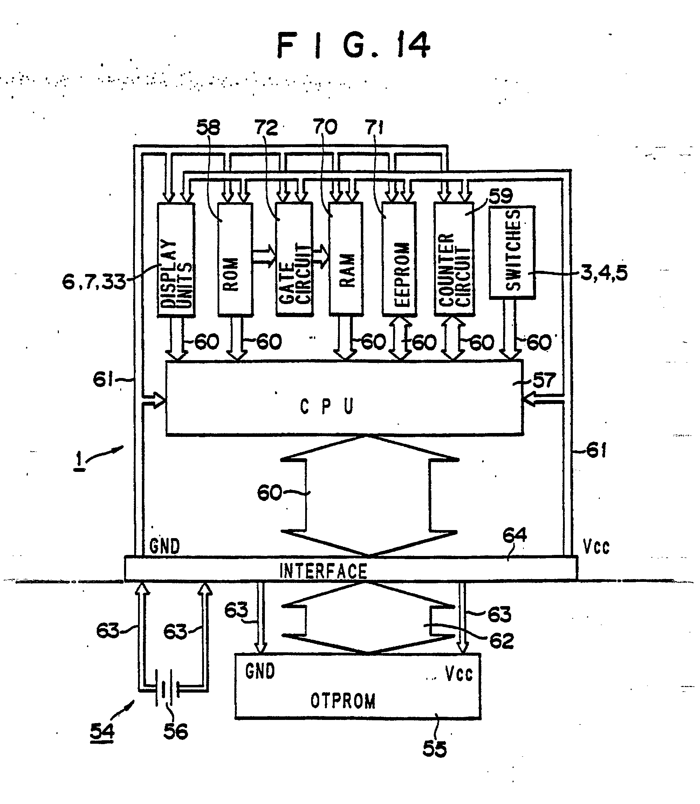

Figure 14 illustrates the fourth embodiment of the present invention applied to a portable electronic parking meter, and the parts corresponding to those of the previous embodiments are denoted with like numerals. This portable electronic parking meter 1 is substantially identical to that shown in Figure 11 in external appearance.

The main body of the portable electronic parking meter 1 comprises a microcomputer (CPU) 57, ROM 58 storing the operation program of the CPU 57, RAM 70 storing certain predetermined matter, EEPROM 71 for storing the number of the remaining units corresponding to a certain time duration of parking which is allowed to the user, a gate circuit 72 provided between the ROM 58 and the RAM 70, a counter circuit 59 for carrying out a counting process according to the elapsing of service time, and an input/output interface 64 serving as an interface for an IC card 54. The CPU 57 is connected to the ROM 58, the RAM 70, the EEPROM 71, the counter circuit 59, the interface 64, the switches 3, 4 and 5, and the display units 6, 7 and 33, via a data bus 60. The input/output interface 64 is also connected to the CPU 57, the ROM 58, the RAM 70, the EEPROM 71, the gate circuit 72, the counter circuit 59 and the display units 6, 7 and 33, via a power line 61.

The IC card 54 accommodates therein OTPROM 55 for storing the contents of a reset command and a registered trademark, and a battery 56 serving as a power source for both this IC card 54 and the main body of the portable electronic parking meter 1. When the IC card 54 is inserted into the main body, the OTPROM 55 is connected to the input/output interface 64 via the data bus 62, and the battery 56 and the OTPROM 55 are connected to the input/output interface 64 via the power line 63. When the IC card 54 is inserted into the main body of the portable electronic parking meter 1, the electric power from the battery 56 is supplied to the various elements of the main body 1 as well as to the OTPROM 55 via the input/output interface 64.

The main body of the portable electronic parking meter 1 and the IC card 54 are sold, for instance, at gasoline stations, and the price of the IC card 54 includes include the charges for parking a car for a certain time duration.

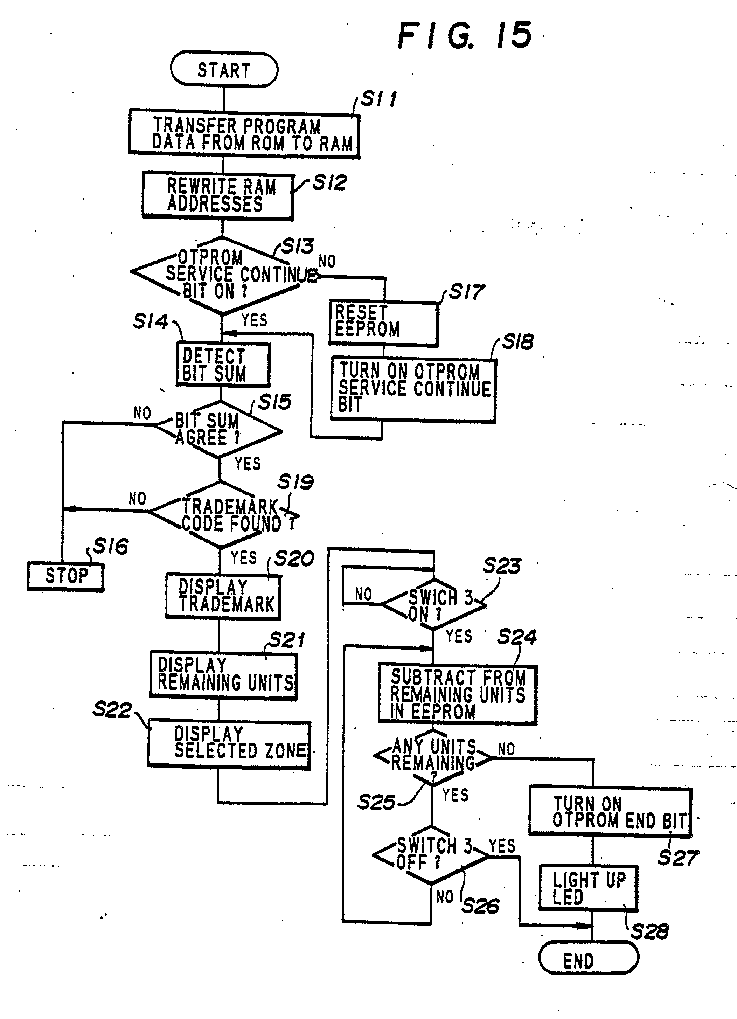

Now the mode of operation of the portable electronic parking meter 1 of the above-described embodiment is described in the following with reference to the flow chart of Figure 15.

After parking his car, the user inserts an IC card 54 into the main body 1. Then, the program data stored in the ROM 58 is transferred to the RAM 70 (step S11).

During this transfer of the program data, the program data is gated by the gate circuit 72. In other words, the program data stored in the ROM 58 is coded, and the gate circuit 72 converts the coded program data into operational data according to certain decoding data. For instance, the gate circuit 72 may consist of an ORX gate circuit which converts program data 50(H) (01010000) into operational program data AF(H) (10101111) according to decoding data FF(H) (11111111). Thereafter, the addresses of the operational program data are rewritten in the RAM 70 (step S12).

In transferring the program in step S11, an operation program corresponding to the IC card 54 is formed in the main body owing to the process of rewriting in step S12; thus, the operation program corresponding to the IC card 54 is not formed unless every one of the aforementioned procedures is executed, and the use of a fake main body is effectively prevented.

It is then determined if a service continue bit at a certain particular address of the OTPROM 55 is ON or not (step S13), and if the service continue bit is ON because the IC card 54 is not newly used for the first time, the number of the bits of the OTPROM 55 of the IC card 54 which are ON (step S14) is compared with a predetermined number (step S15). If the IC card 54 is not genuine or the end bit is ON as described hereinafter, the numbers disagree, and the operation is terminated (step S16).

In step S13, if the IC card 54 is newly used for the first time and the service continue bit is therefore OFF, the number of the remaining units of the EEPROM 71 is reset to the full value (step S17) and, after turning ON the service continue bit (step S18), the system flow advances to step S14. In other words, when a new IC card 54 is used, the EEPROM 71 is reset so as to have the full number of available units which corresponds to the time duration of parking entitled to the owner of the IC card 54 in step S17, and the service continue bit is turned into the ON state in step S18 so that the service continue bit be ON when the IC card 54 is used next time.

As described above, resetting of the EEPROM 71 is caused by the service continue bit being in the OFF state, and the service continue bit which has been in the OFF state is brought into the ON state after the resetting without fail. As a result, the resetting of the number of available units in the EEPROM 71 is possible for only once for each IC card 54.

If the total number of bits contained in the OTPROM 55 is found to be correct in step S15, it is then determined whether a registered trademark code is stored in a certain address of the OTPROM 55 or not (step S19). If it is the case, the registered trademark is displayed on the display unit 7 (step S20). If the address in question does not store any registered trademark therein, the system flow advances to step S16 and stops. In other words, those IC cards 54 which are not genuine and, therefore, do not store the registered trademark code cannot be used. The registered trademark is displayed on the display unit 7 so that when the registered trademark code is duplicated upon the fake IC card 54 the user of this card may be automatically led into committing the infringement of the trademark right.

Thereafter, the number of the remaining units is displayed on the display unit 7 (step S21). As the user presses the switch 4, a zone is selected from a group of zones and is displayed on the display unit 6 (step S22). This zone is selected from a group of zones by the user according to the area in which his car is parked. Specifically, the hourly charges for parking are higher in the city center and are lower in the suburbs, and the selection of the zone determines the rate at which the subtraction is made from the number of the remaining units according to the elapsing of time.

When the switch 3 is pressed (step S23), the counter circuit 59 starts counting, and the user can leave his car after placing the portable electronic parking meter 1 in the car so as to be visible from outside. In this state, as the counter circuit 59 counts, the flags of the EEPROM 71 are sequentially reset from "1" to "0" upon each elapsing of a certain time unit, and subtraction is made from the number of the remaining units (steps S24). It is again determined if there are any units remaining (step S25). If there are some units remaining and no OFF signal is given by the pressing of the switch 3 (step S26), the system flow returns to step S24. In other words, as long as the car is parked, the steps S24, S25 and S26 are repeated.

If all the flags of the EEPROM 71 are reset from "1" to "0" in step S24 and it is determined in step S25 that there is no unit remaining, the end bit of the OTPROM 55 is brought to the ON state (step S27), and the LED of the display unit 33 is lit up (step S28) before the operation of the system is finally terminated.

If the attendant of the parking facility finds the display unit 33 lit up as a result of step S28, he judges the car to be a non-paying car. To avoid this situation, the user checks the number of the remaining units in step S21 and, if he judges the number to be insufficient for the desired time period of parking, he can simply replace the IC card with a new one having a sufficient number of available units.

When there are any available units remaining in step S26, the user returns to his car and simply presses the switch 3 to terminate the operation of the system.

In the above described operation, if the system operation has stopped as the system flow advances from step S25 to step S27, the main body is suitable for reuse by inserting a newly purchased IC card 54 into the main body and thereby resetting the number of the available units stored in the EEPROM 71 of the main body. In other words, as opposed to the case where the main body is required to be discarded after the avaialble units are all used up, only the IC card 54 is required to be discarded according to the present invention.

## Claims

1. A portable electronic meter for measuring the time duration of a service or the quantity of a commodity provided, comprising:
a main body including storage means for storing a certain number of units which correspond to a certain amount of said time or quantity, subtraction means for carrying out subtraction from said number of units according to the elapsing of time or the amount of said commodity provided, and display means for displaying the number of the remaining units; and

a detachable element including circuit means which is required for the operation of said subtraction means, and reset means for restoring the number of units stored in said storage means to an initial value;

said main body further including disabling means for disabling said reset means of said detachable element following the resetting of said storage means by said reset means.

2. A portable electronic meter as defined in claim 1, wherein said circuit means comprises a battery.

3. A portable electronic meter as defined in claim 1, wherein said disabling means comprises means for blowing a fuse provided in said detachable element.

4. A portable electronic meter as defined in claim 3, wherein said disabling means comprises mechanical means which irreversibly forms a circuit to blow said fuse.

5. A portable electronic meter as defined in claim 4, wherein said disabling means is activated when said detachable element is pushed into said main body beyond its normal operative position.

6. A portable electronic meter as defined in claim 1, wherein said circuit means of said detachable element comprises a circuit pattern formed on a sheet member which is adapted to be attached between said battery and a casing part of said detachable element so as to be necessarily destroyed upon removal of said battery, and said disabling means comprises electric contact means which cooperates with said circuit pattern to short-circuit the two ends of said battery.

7. A portable electronic meter as defined in claim 5, wherein said disabling means is activated when said detachable element is pulled out of said main body from its normal operative position.

8. A portable electronic meter as defined in claim 1, wherein said detachable element comprises second storage means storing a reset command for activating said reset means, and said main body comprises interface means for transmitting said reset command from said second storage means to said reset means, said disabling means erasing the reset command stored in said second storage means following the transmission of said reset command from said second storage means to said reset means.

9. A portable electronic meter as defined in claim 8, wherein said second storage means further stores a registered trademark therein, and said main body further comprises image data transmission means for transmitting said trademark to said display means at least once during the entire service life of said detachable element, and inhibition means for disabling said main body when it has failed to detect said trademark in said second storage means.

10. A portable electronic meter as defined in claim 8, wherein said second storage means comprises coded data including specified coded information, and said main body further comprises inhibition means for disabling said main body when it has failed to detect said coded information in said second storage means.

11. A portable electronic meter as defined in claim 1, wherein said main body is further provided with select switch means for varying the rate at which said subtraction is made.

12. A portable electronic meter for measuring the time duration of a service or the quantity of a commodity provided, comprising:

a main body including counter means for carrying out a counting according to the elapsing of time or the amount of said commodity provided, and display means; and

a detachable element including storage means which is provided with a plurality of bit addresses corresponding to a certain amount of said time or quantity and can be rewritten only for once;

said main body further comprising interfacing means which rewrites said addresses in a sequential manner according to the progress of said counting by said counter means and transmits the state of said storage means to said display means.

13. A portable electronic meter as defined in claim 12, wherein said main body is further provided with alarm means for issuing an alarm when it has detected that a whole prescribed area of said storage means is rewritten.

14. A portable electronic meter as defined in claim 12, wherein said main body is further provided with select switch means for varying the rate at which said subtraction is made.

FIG. 1

FIG. 2

# F I G. 3

# F I G. 4

FIG.5

FIG.6

FIG. 7

FIG. 8

# F I G. 9

# F I G. 10

# F I G. 11

# F I G. 12

# F I G. 13

```
                    ┌──────────┐
                    │  START   │
                    └────┬─────┘
                         │
         ┌───────────────┤
         │          S1  ╱◇╲
         │  NO    ╱   SWITCH 13  ╲
         └──────◇◇    ON ?       ◇◇
                   ╲            ╱
                    ╲◇╱
                     │ YES
                ┌────┴─────┐
             S2 │  START   │
                │ COUNTING │
                └────┬─────┘
                     │
                    ╱◇╲
         S3      ╱ ANY UNITS ╲      NO
              ◇◇  REMAINING    ◇◇──────────────┐
                ╲     ?      ╱                  │
                 ╲◇╱                            │
                  │ YES                         │
             ┌────┴─────┐                       │
          S4 │ DISPLAY  │                       │
             │REMAINING │                       │
             │  UNITS   │                       │
             └────┬─────┘                       │
                  │                             │
             ┌────┴──────┐                      │
          S5 │SELECT ZONE│                      │
             └────┬──────┘                      │
                  │                             │
      ┌───────────┤                             │
      │    ┌───────┴────────┐                   │
      │ S6 │ SUBTRACT FROM  │                   │
      │    │REMAINING UNITS │                   │
      │    └───────┬────────┘                   │
      │            │                            │
      │           ╱◇╲                           │
      │   S7   ╱ ANY UNITS ╲    NO              │
      │     ◇◇  REMAINING    ◇◇─────────────┐   │
      │       ╲     ?      ╱                │   │
      │        ╲◇╱                          │   │
      │         │ YES               ┌───────┴───┴──┐
      │        ╱◇╲               S9 │  LIGHT UP    │
      │  S8 ╱ SWITCH 3 ╲  YES       │  LED         │
      │   ◇◇   OFF ?    ◇◇──────┐   └───────┬──────┘
      │     ╲         ╱         │           │
      │      ╲◇╱                │      ┌────┴─────┐
      │       │ NO              └──────│   END    │
      └───────┘                        └──────────┘
```

# F I G. 14

# F I G. 15

START

TRANSFER PROGRAM DATA FROM ROM TO RAM — S11

REWRITE RAM ADDRESSES — S12

OTPROM SERVICE CONTINUE BIT ON ? — S13 → NO

YES

DETECT BIT SUM — S14

BIT SUM AGREE ? — S15 — NO

YES

TRADEMARK CODE FOUND ? — S19 — NO

YES

DISPLAY TRADEMARK — S20

DISPLAY REMAINING UNITS — S21

DISPLAY SELECTED ZONE — S22

STOP — S16

RESET EEPROM — S17

TURN ON OTPROM SERVICE CONTINUE BIT — S18

SWICH 3 ON ? — S23 — NO

YES

SUBTRACT FROM REMAINING UNITS IN EEPROM — S24

ANY UNITS REMAINING ? — S25 — NO

YES

SWITCH 3 OFF ? — S26 — YES

NO

TURN ON OTPROM END BIT — S27

LIGHT UP LED — S28

END